# EUROPÄISCHE PATENTSCHRIFT

(11) **EP 1 643 825 B1**
(45) Veröffentlichungstag und Bekanntmachung des Hinweises auf die Patenterteilung: **26.09.2007**
(21) Anmeldenummer: 04739985.2
(22) Anmeldetag: 17.06.2004
(51) Int. Cl.: A01D 45/06, A23N 7/04

(54) **VERFAHREN ZUM TRENNEN DER ÄUSSEREN FASERSCHICHTEN VON DEN KERNE BILDENDEN SAMEN VON HANFPFLANZEN**
METHOD FOR SEPARATING THE OUTER FIBROUS LAYERS OF THE CORE-FORMING SEEDS OF HEMP PLANTS
PROCEDE DE SEPARATION DES COUCHES FIBREUSES EXTERIEURES DE CHENEVIS FORMANT LE NOYAU DE PLANTES DE CHANVRE

(30) Priorität: 11.07.2003 DE 10331731
(43) Veröffentlichungstag der Anmeldung: 12.04.2006
(73) Patentinhaber: Oldemeyer, Karl Erich, 33824 Werther (DE); Klack, Joachim, 33775 Versmold (DE)
(72) Erfinder: Oldemeyer, Karl Erich, 33824 Werther (DE); Klack, Joachim, 33775 Versmold (DE)
(74) Vertreter: Dantz, Jan Henning
(86) Internationale Anmeldenummer: PCT/EP2004/006526
(87) Internationale Veröffentlichungsnummer: WO 2005/006835

(56) Entgegenhaltungen:
- DE-C- 342 443
- FR-A- 1 322 981
- US-A- 4 959 236

## Beschreibung

Die Erfindung betrifft ein Verfahren zum Trennen der äußeren Faserschichten von den Kerne bildenden Schäben von Hanfpflanzen.

Es ist allgemein bekannt, dass seit einigen Jahren der Anbau bestimmter Sorten von Hanf wieder zulässig ist. Es handelt sich dabei um ökologisch wertvolle Pflanzen, da beim Anbau auf die Verwendung von Schädlingsbekämpfungsmitteln wie Herbiziden und Pestiziden verzichtet werden kann. Darüber hinaus wächst Hanf in fast jedem Klima und erreicht innerhalb von 100 bis 120 Tagen eine Höhe von 3 bis 4 m. Der Durchmesser der Stängel liegt im Bereich von 15 mm. Diese Stängel bestehen aus den die Kerne bildenden Schäben, die von den Fasern umgeben sind. Als nachwachsender Rohstoff trägt Hanf zur Ressourcenschonung bei, da eine relativ große Menge von Kohlenstoff gespeichert wird, so dass der Anbau von Hanf dem Treibhauseffekt entgegengewirkt. Zur Verwendung müssen die Schäben von den Fasern getrennt werden. Dabei ist anzustreben, dass der Anteil der Schäben bei den Fasern äußerst gering ist. Die Schaben können nach der Trennung gemahlen werden und beispielsweise als Füllstoffe für Kunststoffteile verwendet werden, da die Schäben eine gute Verbindung mit dem Kunststoff eingehen, darüber hinaus die Festigkeit erhöhen sowie schalldämmend wirken. Es lassen sich also die Schaben zur Herstellung von technischen Produkten als Zuschlagsstoffe verwenden, aber auch als Einstreu für Ställe. Aus den Fasern lassen sich Dämmstoffe, insbesondere zur Wärmedämmung herstellen. Der Vorteil derartiger Dämmstoffe liegt darin, dass sie im Bedarfsfall umweltfreundlich entsorgt werden können, indem sie verbrannt werden.

Aus der FR-A-1322981 ist ein Dreschverfahren für gereiften Hanf bekannt, bei dem zunächst mittels einer Maschine die Hanfpflanzen geschnitten und in Schwaden auf dem Feld abgelegt werden. Nach einer gewissen Trocknungszeit wird mittels einer Maschine der Hanf auf dem Feld gedroschen. Dazu werden die Schwaden mittels eines ersten Förderbandes zu einer Dreschtrommel transportiert, der zwei unterhalb gelagerte Stützwalzen zugeordnet sind. Die ausgedroschenen Körner werden aufgefangen. Der Schwad wird anschließend mittels eines zweiten Förderbandes zu einer zweiten Dreschtrommel transportiert, der ebenfalls zwei unterhalb gelagerte Stützwalzen zugeordnet sind. Die ausgedroschenen Körner werden aufgefangen Das ausgedroschene Stroh wird danach wieder in Schwaden auf dem Feld abgelegt, um es zu rösten. Wenn ein gewisses Stadium erreicht ist, werden die Schwaden wiederum mittels eines Förderbandes aufgenommen und einem Schneidzylinder zugeführt, um die Hanfpflanzen zu kürzen. Anschließend durchläuft das Hanfstrob ein Walzensystem, bevor es zu einer Rolle aufgewickelt wird.

Vom Feld aus werden diese Rollen dann in einem Textilbetrieb einer Hecheleinrichtung oder einer Kämmeinrichtung zugeführt. Wie verfahrensmäßig die Fasern von den Schäben getrennt werden, ist dieser Druckschrift nicht zu entnehmen.

Der Erfindung liegt die Aufgabe zugrunde, ein Verfahren zum Trennen der äußeren Faserschichten von den Kerne bildenden Schaben von Hanfpflanzen vorzuschlagen, welches mit einfachen und preiswerten Bauelementen umgesetzt werden kann, wobei sichergestellt sein muss, dass nicht nur eine optimale Trennung, sondern auch eine schonende Behandlung der Pflanzen erfolgt.

Die gestellte Aufgabe wird gelöst, indem aus den zu Ballen gepressten sowie getrockneten Hanfpflanzen mittels eines rotierend antreibbaren Walzensystems ein Strang gebildet wird, der mittels Fördereinrichtungen zu mehreren hintereinander angeordneten, rotierend antreibbaren Trennrotoren transportierbar ist, und jeder Trennrotor mit mehreren Reihen von im Abstand zueinander angeordneten Schälmessern bestückt ist.

Bevor die Hanfpflanzen zu Ballen gepresst werden, verbleiben sie eine ausreichend lange Zeit von zum Beispiel 3 Wochen auf dem Feld, damit eine ausreichende Trocknung gegeben ist. Sie werden mittels einer allgemein bekannten Ballenpresse zu Ballen, vorzugsweise zu Rundballen oder Quaderballen gepresst. Dadurch wird ein Transport zu einer nach dem erfindungsgemäßen Verfahren arbeitenden Anlage möglich. Das Walzensystem ist so ausgelegt, dass eine gleichmäßige Strangbildung möglich ist. Bevorzugt werden die Hanfpflanzen zu Rundballen oder Quaderballen gepresst, so dass sinngemäß durch das Walzensystem ein Abziehen erfolgt. Der gebildete Strang kann als endlos angesehen werden, da die einzelnen Ballen kontinuierlich zugeführt werden. Die Trennrotoren sind so ausgelegt, dass in mehreren Schritten das Trennen der Faserschichten von den Schäben erfolgt. Die Fördereinrichtungen sind so ausgelegt, dass der Transport zu den einzelnen Trennrotoren kontinuierlich und ohne Staubildung erfolgt. Die Schälmesser jeder Reihe stehen in einem solchen axialen Abstand zueinander, dass die Stängel der Hanfpflanzen nicht zerstört bzw. zerschnitten werden.

Das Walzensystem ist zweckmäßigerweise mit zwei gegenläufig antreibbaren Abziehwalzen ausgestattet, diese können mit Transportzinken oder dergleichen ausgestattet sein, sowie mit parallel zur Drehachse stehenden Schneidmessern bestückt sein. Durch die Transportzinken ist der kontinuierliche Abzug vom Ballen gewährleistet, wobei die Schneidmesser die relativ langen Pflanzen in relativ kurze Abschnitte zerschneiden. Die Hanfpflanzen werden beim Mähen auf dem Feld bereits zerschnitten, damit dort eine Bearbeitung möglich ist. Das Walzensystem ist zweckmäßigerweise so ausgelegt, dass die Längen der Abschnitte je nach Verwendungszweck der Fasern variiert werden können. Bei der weiteren Bearbeitung mittels der Trennrotoren erfolgt keine weitere Verkürzung. Durch das Zerschneiden wird die weitere Verarbeitung erleichtert. Die Schneidmesser beider Abziehwalzen sind so zueinander gesetzt, dass sie gleichzeitig zum Einsatz kommen.

Die Schälmesser der Trennrotoren sind zweckmäßigerweise sichelartig gestaltet, da dadurch die gesamte Schälkante bzw. Schnittkante des Schälmessers nicht gleichzeitig zum Einsatz kommt. Die aus den Schälmessern gebildeten Reihen stehen zweckmäßigerweise in gleichen Winkelabständen zueinander.

Die Stängel der Hanfpflanzen haben Durchmesser im Bereich von 15 mm. Es ist deshalb vorgesehen, dass die Schälmesser jeder Reihe in bezogen auf die Breite jedes Trennrotors relativ geringen Abständen zueinander angeordnet sind. Diese Abstände sollten nur so groß sein, dass die Stängel nicht unbearbeitet durch den Abstandsspalt gelangen. Eine gute Schälwirkung wird erzielt, wenn die freien Endbereiche der Schälmesser in einem in Drehrichtung der Trennrotoren vorauseilenden Bogen verlaufen oder vorauseilend abgewinkelt sind. Die Trennrotoren sind in vorteilhafter Weise durch in der Drehzahl regelbare Einzelantriebe antreibbar. Dadurch besteht die Möglichkeit, dass die Trennrotoren mit unterschiedlichen Drehzahlen angetrieben werden. Dabei hat sich herausgestellt, dass, in Durchlaufrichtung des Pflanzenstranges gesehen, die Drehzahlen der Trennrotoren von Trennrotor zu Trennrotor zunimmt.

Wie bereits gesagt, können die Schäben in verschiedenster Weise weiterverwendet werden. Insbesondere wenn sie bei der Herstellung von technischen Produkten verwendet werden, ist es notwendig, dass die gekürzten Stängel noch weiter zerkleinert werden. Es ist deshalb vorgesehen, dass in Durchlaufrichtung des Pflanzenstranges gesehen, dem letzten Trennrotor eine Häckseleinrichtung oder mehrere Häckseleinrichtungen für die Fasern und dem Restanteil von Schäben nachgeschaltet ist bzw. sind. Diese Häckseleinrichtung ist allgemein bekannt, und es könnte eine Einrichtung eingesetzt werden, die bislang zum Häckseln von Stroh verwendet wird. Auch die ausgesiebten Schäben können mit einer Zerkleinerungseinrichtung oder mit mehreren hintereinander geschalteten Zerkleinerungseinrichtungen zu Häcksel verarbeitet werden. Da die einzelnen Partikel des Häcksels unterschiedlich groß sind, ist auch noch vorgesehen, dass die zu Häcksel zerkleinerten Schäben mittels einer zugeordneten Siebeinrichtung ausgesiebt werden. Es ist ferner vorgesehen, dass die Drehrichtungen der Schälrotoren gegenläufig zu den Laufrichtungen der Fördereinrichtungen verlaufen. Dies gilt jedoch nur, wenn die Schälmesser mit dem Pflanzenstrang in Wirkverbindung stehen. Die Fördereinrichtungen sind in einfachster Weise als Bandförderer ausgebildet. Dadurch wird eine vollflächige Auflage geschaffen. Jeder Bandförderer ist so ausgelegt, dass er als Siebeinrichtung derart wirkt, dass nach jeder Bearbeitung mittels eines Trennrotors die gelösten Schäben von den weiter transportierten Strang trennbar sind. Die Fasern mit den noch anhaftenden restlichen Schäben verbleiben also im Strang, während die gelösten Schäben unterhalb des jeweiligen Bandförderers gesammelt und auch wieder abtransportiert werden können. Da sich durch die gelösten Schäben die Masse des Stranges ständig verringert, wird die Wirkung der Schälrotoren intensiver. Der noch verbleibende Restanteil nach der Bearbeitung durch den letzten Schälrotor ist demzufolge auch relativ gering. Jeder Bandförderer kann zur Aussiebung der gelösten Schäben mit einem Öffnungen aufweisenden Förderband versehen sein, so dass die gelösten Schäben nach unten fallen. Es ist jedoch auch möglich, dass jeder Bandförderer mehrere im Abstand zueinander angeordnete Förderriemen aufweist, so dass durch die Zwischenräume zwischen den einzelnen Förderriemen der Abtransport der gelösten Schäben möglich ist. In einer anderen Ausführung ist es jedoch auch möglich, dass die Fördereinrichtung so gestaltet ist, dass zwischen den einzelnen Bandförderern eine Siebeinrichtung zwischengeschaltet ist, die so ausgelegt ist, dass der Strang kontinuierlich weitergeführt wird.

Anhand der beiliegenden Zeichnung wird die Erfindung noch näher erläutert. Es zeigt:

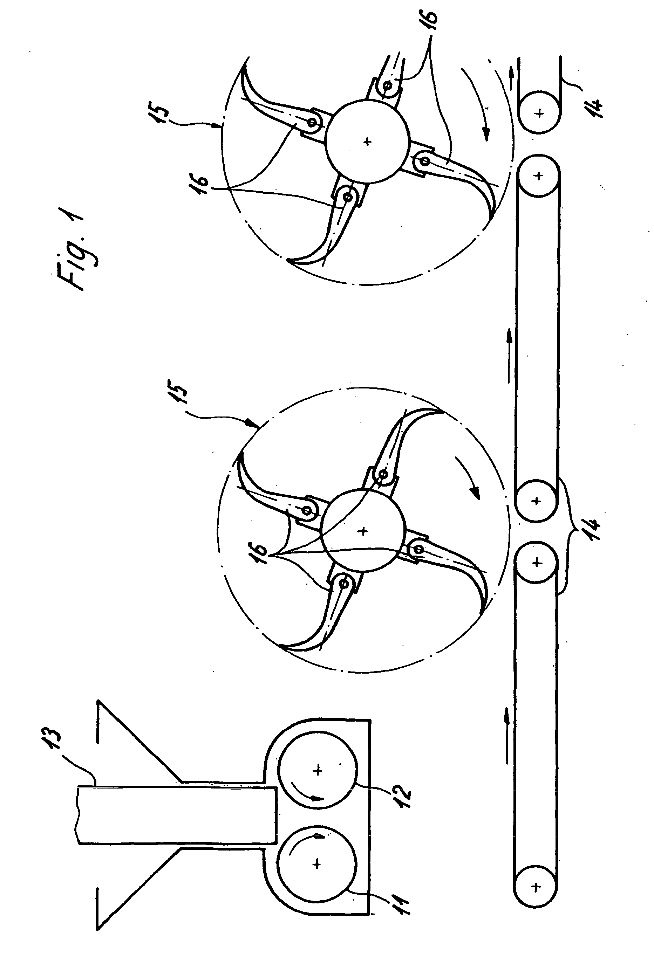

- Figur 1: eine nach dem erfindungsgemäßen Verfahren arbeitende Anlage in einer Teilansicht, rein schematisch.

Die in der Figur 1 dargestellte Anlage enthält ein in einem Gehäuse 10 angeordnetes Walzensystem, welches im dargestellten Ausführungsbeispiel aus zwei Abziehwalzen 11, 12 besteht, die gegenläufig antreibbar sind, wie durch die Pfeile dargestellt ist. Die Abziehwalzen 11 können mit Transportzinken 11 bestückt sein sowie mit ein oder mehreren Schneidmessern, um die von einem Ballen 13 abgezogenen Pflanzen zu zerschneiden. Die Anlage enthält außerdem mehrere Förderbänder 14, um die zerschnittenen Pflanzenstängel entlang von Schälrotoren 15 zu transportieren. Die Anzahl der Förderbänder 14 und der Schälrotoren 15 ist in der Praxis größer als gezeichnet, da aus Darstellungsgründen nur zwei Schälrotoren 15 dargestellt sind. Jeder Schälrotor 15 enthält vier Reihen von Schälmessern 16, die in axialer Richtung in relativ kurzen Abständen zueinander stehen. Die Schälmesser sind im dargestellten Ausführungsbeispiel sichelartig gestaltet, indem die freien äußeren Endbereiche bogenförmig verlaufen. Die Drehrichtungen der Schälrotoren verlaufen während des Kontaktes mit dem nicht dargestellten Pflanzenstrang gegenläufig zu den Obertrumen der Bandförderer 14, wie ebenfalls durch die Pfeile dargestellt ist. Der Bandförderer 14 kann als Siebeinrichtung wirken, so dass nach jeder Bearbeitung mittels eines Trennrotors die gelösten Schäben von dem weiter transportierten Strang trennbar sind. Dies lässt sich konstruktiv besonders einfach erreichen, wenn der Bandförderer 14 mit einem Förderband versehen ist, welches Öffnungen aufweist. Alternativ ist es auch möglich, dass jeder Bandförderer 14 mehrere im Abstand zueinander angeordnete Förderriemen aufweist, so dass die gelösten Schäben durch den freien Bereich zwischen zwei benachbarten Kanten der Förderriemen hindurchfallen. Da die Schäben auch als Zuschlagsstoffe für technische Produkte verwendet werden, werden die Fasern und die noch anhaftenden restlichen Schäben mittels einer bekannten Häckseleinrichtung für Stroh gehäckselt. Außerdem kann noch eine Aussiebung nach den Größen der Partikel erfolgen. In nicht dargestellter Weise kann jeder Bandförderer 14 mit einem Förderband versehen sein, welches Öffnungen aufweist, so dass die gelösten Schäben nach unten durchfallen. Alternativ ist es jedoch auch denkbar, dass jeder Bandförderer 14 mehrere im Abstand zueinander angeordnete Förderriemen aufweist, so dass durch die Lücken die gelösten Schäben nach unten fallen können. Alternativ ist es jedoch auch möglich, dass die Fördereinrichtung aus einzelnen Bandförderem besteht und dass zwischen jedem Bandförderer eine Siebeinrichtung zwischengeschaltet ist, so ausgelegt ist, dass der Strang kontinuierlich weitergeführt wird. Wie die Figur 1 zeigt, stehen die Trennrotoren 15 auf gleicher Höhe und sind baugleich ausgebildet. Im Gegensatz dazu könnten jedoch auch die Trennrotoren 15 unterschiedlich gestaltet sein. Aus der Figur 1 ergibt sich außerdem, dass jeder Bandförderer 14 als Horizontalförderer ausgelegt ist.

Die Erfindung ist nicht auf das dargestellte Ausführungsbeispiel beschränkt. Wesentlich ist, dass mittels eines Walzensystems 11, 12 aus einem Ballen 13 ein kontinuierlicher Pflanzenstrang gebildet wird und dass mehrere Trenn- oder Schälrotoren hintereinandergeschaltet sind.

## Patentansprüche

1. Verfahren zum Trennen der äußeren Faserschichten von Kerne bildenden Schäben von Hanfpflanzen, **dadurch gekennzeichnet, dass** aus den zu Ballen (13) gepressten sowie getrockneten Hanfpflanzen mittels eines rotierend antreibbaren Walzensystems (11, 12) ein Strang gebildet wird, der mittels Fördereinrichtungen zu mehreren hintereinander angeordneten, rotierend antreibbaren Trennrotoren (15) transportierbar ist, und jeder Trennrotor mit mehreren Reihen von in axialer Richtung im Abstand zueinander angeordneten Schälmessern (16) bestückt ist.

2. Verfahren nach Anspruch 1, **dadurch gekennzeichnet, dass** das Walzensystem zwei gegenläufig antreibbare Abziehwalzen (11, 12) aufweist, die mit Transportzinken mit parallel zur Drehachse stehenden Schneidmessern bestückt sind.

3. Verfahren nach Anspruch 1, **dadurch gekennzeichnet, dass** die Schälmesser (16) jedes Trennrotors (15) sichelartig gestaltet sind, und dass die aus den Schälmessern (16) gebildeten Reihen in gleichen Winkelabständen zueinander stehen.

4. Verfahren nach Anspruch 3, **dadurch gekennzeichnet, dass** die Schälmesser (16) jeder Reihe, bezogen auf die Breite jedes Trennrotors (15), in axialer Richtung in relativ geringen Abständen zueinander angeordnet sind.

5. Verfahren nach Anspruch 3 oder 4, **dadurch gekennzeichnet, dass** die freien Endbereiche der Schälmesser (16) in einem in Drehrichtung des Trennrotors (15) vorauseilenden Bogen oder vorauseilend abgewinkelt sind.

6. Verfahren nach einem oder mehreren der vorhergehenden Ansprüche 1 bis 5, **dadurch gekennzeichnet, dass** die Trennrotoren (15) durch in der Drehzahl regelbare Einzelantriebe antreibbar sind.

7. Verfahren nach Anspruch 6, **dadurch gekennzeichnet, dass** die Drehzahlen der Trennrotoren (15) in Durchlaufrichtung des Pflanzenstranges gesehen von Trennrotor (15) zu Trennrotor (15) zunehmen.

8. Verfahren nach einem oder mehreren der vorhergehenden Ansprüche 1 bis 7, **dadurch gekennzeichnet, dass** in Durchlaufrichtung des Stranges gesehen, dem letzten Trennrotor (15) eine Häckseleinrichtung oder mehrere hintereinander angeordnete Häckseleinrichtungen für die Fasern mit den Restanteilen von Schäben nachgeschaltet ist bzw. sind.

9. Verfahren nach einem oder mehreren der vorhergehenden Ansprüche 1 bis 7, **dadurch gekennzeichnet, dass** die ausgesonderten Schäben mittels einer Zerkleinerungseinrichtung zu Häcksel verarbeitbar sind.

10. Verfahren nach Anspruch 8, **dadurch gekennzeichnet, dass** die Schäben mittels einer der Zerkleinerungseinrichtung zugeordneten Siebeinrichtung aussiebbar sind.

11. Verfahren nach einem oder mehreren der vorhergehenden Ansprüche 1 bis 10, **dadurch gekennzeichnet, dass** die Drehrichtungen der Schälrotoren (15), im Zeitpunkt der Wirkverbindung mit dem Strang, gegenläufig zu den Laufrichtungen der Fördereinrichtungen (14) verlaufen.

12. Verfahren nach einem oder mehreren der vorhergehenden Ansprüche 1 bis 11, **dadurch gekennzeichnet, dass** die Fördereinrichtungen (14) als Bandförderer ausgebildet sind.

13. Verfahren nach Anspruch 12, **dadurch gekennzeichnet, dass** jeder Bandförderer (14) als Siebeinrichtung derart wirkt, dass nach jeder Bearbeitung mittels eines Trennrotors (15) die gelösten Schäben von dem weiter transportierten Strang trennbar sind.

14. Verfahren nach Anspruch 13, **dadurch gekennzeichnet, dass** jeder Bandförderer (14) mit einem Öffnungen aufweisenden Förderband versehen ist.

15. Verfahren nach Anspruch 13, **dadurch gekennzeichnet, dass** jeder Bandförderer (14) mehrere im Abstand zueinander angeordnete Förderriemen aufweist.

16. Verfahren nach Anspruch 13, **dadurch gekennzeichnet, dass** die Fördereinrichtungen als Bandförderer (14) ausgebildet sind, wobei zwischen den einzelnen Bandförderern (14) eine Siebeinrichtung zwischengeschaltet ist, die als Fördereinrichtung ausgelegt ist.

## Claims

1. Method for separating the outer fibre layers of kernel-forming shives of hemp plants, **characterized in that** a strand is formed, by means of a roller system (11, 12) drivable in rotation, from the hemp plants pressed into bales (13) and dried and can be transported by means of conveying devices to a plurality of separating rotors (15) arranged one behind the other and drivable in rotation, and each separating rotor is equipped with a plurality of rows of scraping knives (16) arranged at a distance from one another in the axial direction.

2. Method according to Claim 1, **characterized in that** the roller system has two draw-off rollers (11, 12) which are drivable contradirectionally and which are equipped with transport tines having cutting knives standing parallel to the axis of rotation.

3. Method according to Claim 1, **characterized in that** the scraping knives (16) of each separating rotor (15) are of sickle-like configuration, and **in that** the rows formed from the scraping knives (16) are at equal angular intervals with respect to one another.

4. Method according to Claim 3, **characterized in that** the scraping knives (16) of each row are arranged at relatively short distances from one another in the axial direction with respect to the width of each separating rotor (15).

5. Method according to Claim 3 or 4, **characterized in that** the free end regions of the scraping knives (16) are angled in an arc leading in the direction of rotation of the separating rotor (15) or are angled with a lead.

6. Method according to one or more of the preceding Claims 1 to 5, **characterized in that** the separating rotors (15) can be driven by means of individual drives of regulatable rotational speed.

7. Method according to Claim 6, **characterized in that** the rotational speeds of the separating rotors (15) increase from separating rotor (15) to separating rotor (15), as seen in the run-through direction of the plant strand.

8. Method according to one or more of the preceding Claims 1 to 7, **characterized in that,** as seen in the run-through direction of the strand, the last separating rotor (15) is followed by a chopping device or a plurality of chopping devices arranged one behind the other for the fibres having the residual fractions of shives.

9. Method according to one or more of the preceding Claims 1 to 7, **characterized in that** the separated-out shives can be processed into chaff by means of a comminuting device.

10. Method according to Claim 8, **characterized in that** the shives can be screened out by means of a screening device assigned to the comminuting device.

11. Method according to one or more of the preceding Claims 1 to 10, **characterized in that** the directions of rotation of the scraping rotors (15) run, at the time point of operative connection with the strand, contradirectionally with respect to the running directions of the conveying devices (14).

12. Method according to one or more of the preceding Claims 1 to 11, **characterized in that** the conveying devices (14) are designed as band conveyors.

13. Method according to Claim 12, **characterized in that** each band conveyor (14) acts as a screening device in such a way that, after each processing by means of a separating rotor (15), the loosened shives can be separated from the strand transported further on.

14. Method according to Claim 13, **characterized in that** each band conveyor (14) is provided with a conveyor band having orifices.

15. Method according to Claim 13, **characterized in that** each band conveyor (14) has a plurality of conveyor belts arranged at a distance from one another.

16. Method according to Claim 13, **characterized in that** the conveying devices are designed as band conveyors (14), a screening device, which is designed as a conveying device, being interposed between the individual band conveyors (14).

## Revendications

1. Procédé de séparation des couches de fibres externes de chènevottes formant la partie centrale du chanvre, **caractérisé en ce que**, à partir de chanvre comprimé en balles (13) et séché, on forme au moyen d'un système de cylindres entraînables en rotation (11, 12) un écheveau qui peut être transporté par des dispositifs convoyeurs vers plusieurs rotors de séparation (15) entraînables en rotation disposés à la suite les uns des autres et **en ce que** chaque rotor de séparation est équipé de plusieurs rangées de couteaux décortiqueurs (16) disposés à distance les uns des autres dans le sens axial.

2. Procédé selon la revendication 1, **caractérisé en ce que** le système de cylindres présente deux cylindres détacheurs (11, 12) entraînables dans des directions opposées et munis de dents de transport comportant des lames de coupe parallèles à l'axe de rotation.

3. Procédé selon la revendication 1, **caractérisé en ce que** les couteaux décortiqueurs (16) de chaque rotor de séparation (15) sont falciformes et **en ce que** les rangées formées par les couteaux décortiqueurs (16) se trouvent à des distances angulaires égales les unes par rapport aux autres.

4. Procédé selon la revendication 3, **caractérisé en ce que** les couteaux décortiqueurs (16) de chaque rangée sont disposés à des distances relativement petites les uns des autres dans le sens axial par rapport à la largeur du chaque rotor de séparation (15).

5. Procédé selon la revendication 3 ou la revendication 4, **caractérisé en ce que** les zones d'extrémité libre des couteaux décortiqueurs (16) sont incurvées ou recourbées avec une avance de phase par rapport au sens de rotation du rotor de séparation (15).

6. Procédé selon l'une ou plusieurs des revendications 1 à 5 précédentes, **caractérisé en ce que** les rotors de séparation (15) peuvent être mus par des entraînements individuels dont la vitesse est réglable.

7. Procédé selon la revendication 6, **caractérisé en ce que** les vitesses des rotors de séparation (15), vues dans le sens d'avance de l'écheveau de chanvre, augmentent d'un rotor de séparation (15) à l'autre.

8. Procédé selon l'une ou plusieurs des revendications 1 à 7 précédentes, **caractérisé en ce que**, vu dans le sens d'avance de l'écheveau, le dernier rotor de séparation (15) est suivi d'un dispositif hacheur ou de plusieurs dispositifs hacheurs disposés à la suite les uns des autres pour les fibres avec les restes de chènevottes.

9. Procédé selon l'une ou plusieurs des revendications 1 à 7 précédentes, **caractérisé en ce que** les chènevottes séparées peuvent être hachées au moyen d'un dispositif de broyage.

10. Procédé selon la revendication 8, **caractérisé en ce que** les chènevottes peuvent être tamisées au moyen d'un dispositif de tamisage associé au dispositif de broyage.

11. Procédé selon l'une ou plusieurs des revendications 1 à 10 précédentes, **caractérisé en ce que** les sens de rotation des rotors décortiqueurs (15), au moment de la liaison active avec l'écheveau, sont opposés aux sens de rotation des dispositifs convoyeurs (14).

12. Procédé selon l'une ou plusieurs des revendications 1 à 11 précédentes, **caractérisé en ce que** les dispositifs convoyeurs (14) sont réalisés sous la forme de convoyeurs à tapis.

13. Procédé selon la revendication 12, **caractérisé en ce que** chaque convoyeur à tapis (14) fonctionne comme un dispositif de tamisage de façon à pouvoir séparer les chènevottes détachées de l'écheveau transporté plus loin après chaque traitement au moyen d'un rotor de séparation (15).

14. Procédé selon la revendication 13, **caractérisé en ce que** chaque convoyeur à tapis (14) est équipé d'un tapis transporteur présentant des ouvertures.

15. Procédé selon la revendication 13, **caractérisé en ce que** chaque convoyeur à tapis (14) présente plusieurs bandes transporteuses espacées les unes des autres.

16. Procédé selon la revendication 13, **caractérisé en ce que** les dispositifs convoyeurs sont réalisés sous la forme de convoyeurs à tapis (14), un dispositif de tamisage configuré comme un dispositif convoyeur étant intercalé entre les différents convoyeurs à tapis (14).
